(19) Europäisches Patentamt / European Patent Office / Office européen des brevets

(11) **EP 4 768 607 A1**

(12) **EUROPEAN PATENT APPLICATION**
published in accordance with Art. 153(4) EPC

(43) Date of publication:
**01.07.2026 Bulletin 2026/27**

(21) Application number: **24867923.5**

(22) Date of filing: **31.07.2024**

(51) International Patent Classification (IPC):
**C21B 11/10** (2006.01)    **F27B 3/08** (2006.01)

(52) Cooperative Patent Classification (CPC):
**C21B 11/10; F27B 3/08;** Y02P 10/20

(86) International application number:
**PCT/JP2024/027265**

(87) International publication number:
**WO 2025/062842 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151422**

(71) Applicant: JFE Steel Corporation
Tokyo 100-0011 (JP)

(72) Inventors:
• **MIWA, Yoshihiro**
Tokyo 100-0011 (JP)
• **ODA, Nobuhiko**
Tokyo 100-0011 (JP)
• **KIYOIZUMI, Kota**
Tokyo 100-0011 (JP)
• **KAWABATA, Ryo**
Tokyo 100-0011 (JP)
• **SUZUKI, Takeshi**
Tokyo 105-0014 (JP)

(74) Representative: **Hoffmann Eitle**
**Patent- und Rechtsanwälte PartmbB**
**Arabellastraße 30**
**81925 München (DE)**

(54) **METHOD FOR MELTING METAL RAW MATERIAL**

(57) To provide a method for melting a metal raw material that can perform a process of melting a large amount of metal raw material by appropriately setting the conditions for performing a process of melting a metal raw material composed partially or entirely of reduced iron, using a submerged arc furnace (SAF), and by passing a stable current. Specifically, provided is a method for melting a metal raw material using an electric furnace comprising accommodating molten iron, molten slag, a metal raw material, and an auxiliary raw material in stacked layers in the electric furnace, and discharging the molten iron and the molten slag, in which the resistivity within the electric furnace is set within a range of 0.01 to 0.02 ($\Omega \cdot$m) when a current is supplied to the molten metal to heat the molten metal through an arc or via the molten slag and the metal raw material.

[Fig. 1]

**Description**

Technical Field

The present invention relates to a method for melting a metal raw material. In particular, the present invention relates to a method for melting a metal raw material that can produce molten metal by melting a metal raw material containing reduced iron in an electric furnace or a submerged arc furnace.

Background Art

In recent years, there has been a growing demand to reduce $CO_2$ emissions to mitigate environmental burdens. In the steel industry as well, the production of iron sources through the direct reduction (DR) process, instead of the blast furnace process that involves significant $CO_2$ emissions, is drawing attention. The direct reduction (DR) process produces direct reduced iron (DRI) by reducing iron-containing agglomerates in a shaft furnace, for example. This reduced iron, along with other iron source raw materials such as iron scrap, is charged into an electric arc furnace (EAF) or a submerged arc furnace (SAF), for example, where the mixture is heated and melted, and slag is subsequently separated to yield molten iron.

In Japan, studies are being conducted to apply low-grade iron ore, such as that produced in Australia or India, to the direct reduction (DR) process. With the currently available electric arc furnaces (EAFs), it is difficult to perform melting of reduced iron produced from low-grade iron ore as a raw material. Therefore, the use of submerged arc furnaces (SAFs) is being considered.

Due to such a technical background, various molten metal production processes involving the use of submerged arc furnaces (SAFs) have been proposed. These molten metal production processes include a method for producing molten iron through so-called flat bath operation (FBO). For example, the production of molten iron with a submerged arc furnace (SAF) is performed through flat bath operation (FBO). In the flat bath operation (FBO), a melting process is employed where raw materials including metal materials, such as scrap, pig iron, direct reduced iron (DRI), or hot briquetted iron (HBI), and auxiliary raw materials are continuously supplied into a submerged arc furnace (SAF) without opening its furnace cover, or where the raw materials are charged into the furnace using small buckets. While the raw materials are charged into the submerged arc furnace (SAF), electrodes are inserted into molten slag to generate arcs between the plurality of electrodes or between an electrode and molten iron, and also, a current is passed through the raw materials and the slag. As a result, the raw materials are heated to melt through resistance heating and heat transfer.

One problem with the submerged arc furnace (SAF) is the low efficiency of heat transfer to raw materials located away from the electrodes. For example, incomplete metal melting resulting from delayed melting of metal raw materials will cause issues, such as concentration gradients, unreliable temperature measurement, unreliable process control, and tapping of the molten metal at excessively high temperatures. To address the issues with non-uniform temperatures, the electromagnetic stirring of molten metal disclosed in Patent Literature 1 and the gas stirring of molten slag disclosed in Patent Literature 2 have been developed.

Further, Patent Literature 3 proposes a technique for producing molten metal by arc heating of pre-reduced metal. Specifically, the method for producing molten metal described in Patent Literature 3 employs a stationary, non-radially symmetric melting furnace that melts pre-reduced metal by arc heating primarily utilizing radiation heat. The melting furnace includes electrodes for arc heating, and a pre-reduced metal feeding mechanism. In addition, the method for producing molten metal described in Patent Literature 3 includes melting molten iron while maintaining the refractory wearing index RF, which is defined by a predetermined relational expression, at 400 $MWV/m^2$ or less.

Citation List

Patent Literature

Patent Literature 1: Japanese Translation of PCT International Application Publication No. 2020-505579
Patent Literature 2: Japanese Patent Laid-Open No. 2002-317918
Patent Literature 3: Japanese Patent Laid-Open No. 2003-105415

Summary of Invention

Technical Problem

However, the conventional techniques have the following problems. That is, the technique described in Patent Literature 1 is merely a method for producing molten metal that is applied to a so-called electric arc furnace. In addition, the technique described in Patent Literature 2 proposes an electric furnace for a waste melting furnace and is not intended for mass production of molten metal. From such a technical perspective, it has been desirable to apply a submerged arc furnace (SAF) to a method for producing molten metal and to establish an operating method for the electric furnace that takes molten metal productivity into consideration.

In addition, the technique described in Patent Literature 3 involves setting the resistance value within the electric furnace to an extremely low level to melt molten iron while maintaining the refractory wearing index RF at 400 $MWV/m^2$ or less. Therefore, applying the method for producing molten metal described in Patent Literature 3 to melt reduced iron results in failures, such as short circuits between pitch circle diameters (PCD) of electrodes. Consequently, with the technique described in Patent Literature 3, it is difficult to pass a stable current through the electric furnace, making it impossible to sufficiently melt reduced iron, which poses a problem.

Further, the process of melting reduced iron, which is formed from low-grade iron ore as a raw material, by applying a submerged arc furnace (SAF) is difficult to perform for the following reasons. When melting reduced iron using a submerged arc furnace (SAF), the internal conditions of the submerged arc furnace (SAF) vary significantly depending on the voltage and current setting conditions for generating arcs used for the melting process. For example, if the voltage applied to generate arcs during the melting of reduced iron using a submerged arc furnace (SAF) is excessively high, a large arc discharge is generated. This increases the radiant heat from the arc discharge, which significantly lowers the thermal efficiency of the molten iron.

Meanwhile, if the voltage used to generate such arcs is too low, the distance between the molten iron and each electrode used to generate an arc becomes excessively short within the submerged arc furnace (SAF). Therefore, heating of the molten iron becomes unstable due to fluctuations in the surface level of the molten iron present within the submerged arc furnace (SAF). Further, heating of the molten iron also becomes unstable due to raw materials entering an electric circuit formed of each electrode and the molten iron within the submerged arc furnace (SAF), which is problematic. In addition, no reports have been made regarding the appropriate range of voltage to be applied during the melting of reduced iron when melting reduced iron using a submerged arc furnace (SAF).

The present invention has been made in view of the foregoing circumstances, and an object of the present invention is to provide a method for melting a metal raw material that enables the melting of a large amount of metal raw material by appropriately setting the conditions for melting a metal raw material composed partially or entirely of reduced iron, using a submerged arc furnace (SAF), and by passing a stable current.

Solution to Problem

The inventors have conducted various experiments to solve the foregoing problems and found that it is possible to perform a process of melting a large amount of metal raw material composed partially or entirely of reduced iron by appropriately setting the resistivity within the furnace for performing a process of melting a metal raw material composed partially or entirely of reduced iron, using a submerged arc furnace (SAF) as an electric furnace, and by passing a stable current through the electric furnace. The present invention has been made based on the foregoing finding, and the summary of the present invention is as follows.

That is, a method for melting a metal raw material according to the present invention, which advantageously solves the foregoing problems, is a method for melting a metal raw material using an electric furnace including accommodating molten iron, molten slag, a metal raw material, and an auxiliary raw material in stacked layers in the electric furnace, and individually and continuously discharging the molten iron and the molten slag, characterized in that the resistivity within the electric furnace is set within a range of 0.01 to 0.02 ($\Omega \cdot m$) when a current is supplied to the molten metal to heat the molten metal through an arc or via the molten slag and the metal raw material.

It should be noted that the method for melting a metal raw material according to the present invention may include the following features, for example, that are considered to be preferable means for solving the problems.

(a) The metal raw material is melted by means of flat-bath operation.
(b) A metallization ratio of the metal raw material is 60% or greater.
(c) A density of a current flowing through electrodes of the electric furnace is set within a range of 50 to 70 ($A/m^2$).
(d) The electrodes are of a self-baking type.
(e) The electric furnace is a three-phase AC type having three electrodes, or a single-phase type having a plurality of pairs of electrodes.
(f) The metal raw material and the auxiliary raw material are supplied to a gap between the electrodes after being mixed together or individually.

(g) The metal raw material is composed partially or entirely of reduced iron.

(h) A basicity of the molten slag is in a range of 1.0 to 1.5, where the basicity of the molten slag is a mass ratio of CaO to $SiO_2$ in the molten slag.

(i) The electric furnace is an arc furnace, and

at least one of a distance between the interface of the molten iron and the arc electrode, the arc voltage, and the arc current is adjusted, such that an arc voltage E (V), which is a voltage to ground, and an arc current I (A) per arc electrode of the arc furnace satisfy Relational Expression (i) below.

[Expression 1]

$$\frac{E[V]}{\sqrt{I[A]}} \leqq 2.0 \qquad (i)$$

(j) The electric furnace is a submerged arc furnace.

Advantageous Effects of Invention

According to the present invention, it is possible to perform a process of melting a large amount of metal raw material by appropriately setting the conditions for performing a process of melting a metal raw material that is composed partially or entirely of reduced iron, using a submerged arc furnace (SAF) as an electric furnace, and by passing a stable current through the electric furnace.

Brief Description of Drawings

[Fig. 1] is a schematic view illustrating an overview of an electric furnace used to perform a method for melting a metal raw material according to the present embodiment.

[Fig. 2] is a schematic view illustrating the state of an electrode and its surrounding area when a current is passed through the electric furnace used to perform the method for melting a metal raw material according to the present embodiment.

[Fig. 3] is a schematic view illustrating an overview of a single-phase AC submerged arc furnace used to perform the method for melting a metal raw material according to the present embodiment.

Description of Embodiments

[First embodiment]

A method for melting a metal raw material according to a first embodiment will be described. The method for melting a metal raw material according to the present embodiment is a method in which molten iron, molten slag, a metal raw material, and an auxiliary raw material are accommodated in stacked layers in the electric furnace, and the molten iron and the molten slag are discharged, thereby melting the metal raw material using the electric furnace. This method is characterized in that, when a current is supplied to heat the molten metal via an arc or through the molten slag and the metal raw material, the resistivity within the electric furnace is set within a range of 0.01 to 0.02 ($\Omega \cdot m$). Each step included in the method for melting a metal raw material according to the present embodiment will be described below.

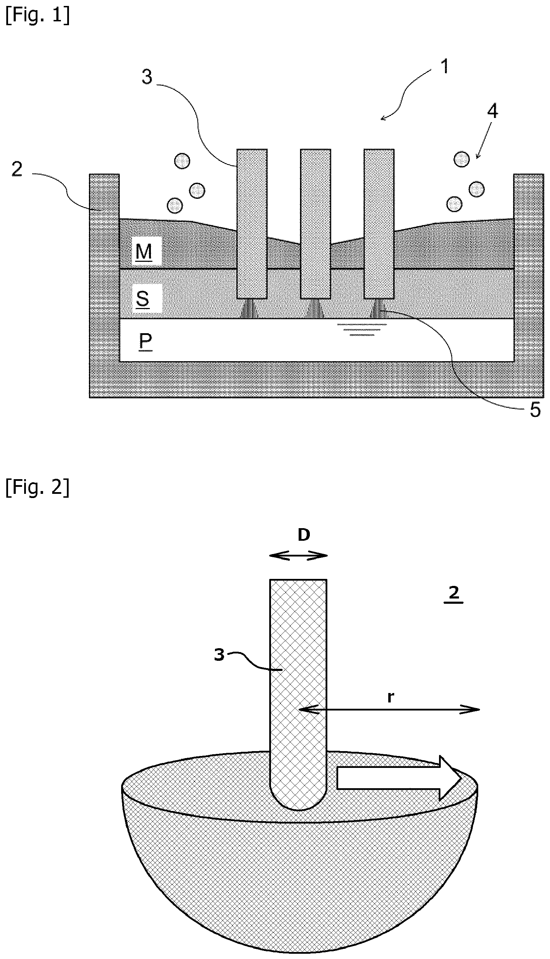

Fig. 1 is a schematic longitudinal sectional view illustrating the configuration of a submerged arc furnace used in the method for melting a metal raw material according to the present embodiment. As illustrated in Fig. 1, a submerged arc furnace 1 includes a furnace wall 2, a plurality of electrodes 3, and a transformer (not illustrated).

The submerged arc furnace 1 may also include an electromagnetic stirrer (not shown), including a linear motor. In addition, the submerged arc furnace 1 may be configured such that bubbles can be blown into the furnace by gas blowing through a bottom-blown tuyere (not shown). Thus, the submerged arc furnace 1, which is an electric furnace suitable for the method for melting a metal raw material according to the present embodiment, can stir molten iron (molten pig iron) P by having a stirring means, such as an electromagnetic stirrer 6 and a bottom-blown tuyere 7. This can transfer heat from an arc discharge to the interface between the molten iron P and molten slag S, and thus can melt a metal raw material composed partially or entirely of reduced iron.

Note that the submerged arc furnace 1 may be either an electric furnace that is approximately circular in plan view, or a rectangular prism-shaped electric furnace.

As illustrated in Fig. 1, the submerged arc furnace 1 includes the furnace wall 2, the plurality of electrodes 3, and a transformer (not shown). A refractory material forming the furnace wall 2 is not particularly limited, provided that it exhibits excellent fire resistance, heat insulation properties, and heat retaining properties. For example, the refractory material may be primarily composed of one or more materials selected from the group consisting of carbon, magnesia, and alumina.

A plurality of electrodes 3 is disposed within the submerged arc furnace 1. The electrodes 3 may form an electrode group including three electrodes 3, or an electrode group including a plurality of pairs of electrodes 3. When the submerged arc furnace 1 includes three electrodes 3, the submerged arc furnace 1 functions as a three-phase AC submerged arc furnace. Conversely, when the submerged arc furnace 1 includes a plurality of pairs of electrodes 3, it functions as a single-phase AC submerged arc furnace.

The electrodes 3 may be either prebaked electrodes or self-baking electrodes. The type of the electrodes 3 is not particularly limited, and may, for example, be graphite electrodes used as electrodes in an electric steelmaking furnace capable of producing steel by melting iron scrap. Graphite electrodes are preferred because they can be used even when the temperature within the submerged arc furnace 1 is approximately 1600°C. Further, graphite electrodes are preferred because they can be used even when the temperature at the distal end portions of the graphite electrodes is approximately 3000°C. Adopting graphite electrodes as the electrodes 3 is preferred as it enables a large amount of current to flow through the interior of the submerged arc furnace 1.

The electrode diameter D and length of each electrode 3 vary depending on factors such as the metal-raw-material melting capacity of the submerged arc furnace 1 and the supplied power. Herein, the electrode diameter D of each electrode 3 is defined based on the type of the electrode as follows. When the electrode 3 is a prebaked graphite electrode, the diameter of the prebaked electrode is defined as the electrode diameter D. When the electrode 3 is a self-baking electrode, the inner diameter of a casing into which electrode paste, serving as a raw material of the self-baking electrode, is charged is defined as the electrode diameter D.

For example, when the metal-raw-material melting capacity of the submerged arc furnace 1 is 20 to 60 t/h, the electrode diameter D of each electrode 3 is 1000 to 1800 mm. The length of each electrode 3 may be any length that can ensure the length required for the vertical movement of the electrode 3, depending on factors such as the height and molten-metal holding capacity of the submerged arc furnace 1.

The submerged arc furnace 1 includes a transformer. The transformer converts a voltage applied across electrodes configured with the plurality of electrodes 3 into an appropriate voltage. The transformer is provided with a tap-changing terminal on its high-voltage side. The output voltage of the transformer can be adjusted by switching the tap-changing terminal. Further, a current flowing between electrodes formed from the plurality of electrodes 3 can be adjusted by changing the heights of the electrodes 3, which are disposed in the molten slag S accumulated within the submerged arc furnace 1.

The method for melting a metal raw material according to the present embodiment is performed by inserting the plurality of electrodes 3 into the molten slag S accumulated within the submerged arc furnace 1, generating an arc 5 between the plurality of electrodes 3 or between an electrode 3 and the molten iron (molten pig iron) P, and melting raw materials M, which include a metal raw material 4 and an auxiliary raw material charged into the submerged arc furnace 1, by radiation heating of the arc 5. In addition, the method for melting a metal raw material according to the present embodiment is performed by inserting the plurality of electrodes 3 into the molten slag S accumulated within the submerged arc furnace 1, and heating and melting the raw materials M, which include the metal raw material 4 and the auxiliary raw material, through resistance heating caused by a current flowing between the electrodes 3, the raw materials M, the molten slag S, and the molten iron P.

In the method for melting a metal raw material according to the present embodiment, it is preferable to charge the metal raw material 4 from above the submerged arc furnace 1 and to continuously produce molten metal by melting the raw materials M including the metal raw material 4. That is, with the method for melting a metal raw material according to the present embodiment, it is possible to individually and continuously discharge the molten iron P obtained by melting the raw materials M including the metal raw material 4, and the molten slag S, and to melt the raw materials M including the metal raw material 4 through flat bath operation, for example. Further, in the method for melting a metal raw material according to the present embodiment, the molten iron P obtained by melting the raw materials M including the metal raw material 4, the molten slag S, and the auxiliary raw material may be charged in this order into the electric furnace. The order of charging the metal raw material 4 and auxiliary raw material may be changed as appropriate, and the raw materials M including the metal raw material 4 can be melted without adopting flat bath operation.

In such a case, the submerged arc furnace 1 preferably includes a discharge port for the molten metal and a discharge port for the molten slag S. The discharge port for the molten metal and the discharge port for the molten slag S are preferably arranged to face different directions relative to the center of the furnace bottom. It is also preferable to fill each discharge port with a plugging material and, at a time point when a predetermined amount of molten metal has been retained, discharge the molten metal by penetrating the plugging material to open the discharge port.

In the method for melting a metal raw material according to the present embodiment, the raw materials M including the metal raw material 4 are charged into the submerged arc furnace 1. Reduced iron contained in the metal raw material 4 may be produced through the direct reduction process in advance. Alternatively, commercially available reduced iron may be purchased for use. The metal raw material 4 is composed partially or entirely of reduced iron, and may also contain a small amount of iron scrap or scale in addition to the reduced iron. The mass ratio of the reduced iron to the metal raw material 4 is preferably 5 to 100%.

The method for melting a metal raw material according to the present embodiment includes the technical feature of setting the metallization ratio of the metal raw material to be accommodated in the electric furnace to 60% or greater. Herein, the metallization ratio (DM) of the metal raw material is defined by Relational Expression (1) below, using the mass of the total iron content (T.Fe) and the mass of the metallic iron content (M.Fe) in the metal raw material.

[Expression 2]

$$DM \text{ (metallization ratio)} = \frac{M.\ Fe\ (wt)}{T.\ Fe\ (wt)} \times 100 \qquad (1)$$

In the method for melting a metal raw material according to the present embodiment, when the metallization ratio of the metal raw material 4 is 60% or greater, the electric power unit consumption required to melt the metal raw material 4 becomes low, resulting in excellent energy efficiency. The upper limit of the metallization ratio of the metal raw material 4 is not particularly limited. However, if the metallization ratio of the metal raw material 4 is too high, the metal raw material 4 charged into the submerged arc furnace 1 from above the molten slag S may become electrically conductive in the molten slag S, which may undesirably reduce the resistance heat.

Further, in the method for melting a metal raw material according to the present embodiment, when the metallization ratio of the metal raw material 4 is 60% or greater, the FeO content in the molten slag S as a by-product decreases, resulting in an increased iron yield. Moreover, when the metallization ratio of the metal raw material 4 is 60% or greater, erosion of the refractory material forming the furnace wall 2 of the submerged arc furnace 1 can be suppressed.

From such a perspective, in the method for melting a metal raw material according to the present embodiment, the metallization ratio of the metal raw material 4 is more preferably 80% or greater, and further preferably 95%. In the method for melting a metal raw material according to the present embodiment, if the metallization ratio of the metal raw material 4 exceeds 95%, the metal raw material 4 contained in the raw materials M charged into the submerged arc furnace 1 from above the molten slag S may become electrically conductive in the molten slag S, which may undesirably reduce the resistance heat. Thus, the upper limit of the metallization ratio of the metal raw material 4 is preferably set to about 90%.

If the metal raw material 4 charged into the submerged arc furnace 1 contains carbon, the unreduced FeO contained in the metal raw material 4 can be efficiently reduced in the submerged arc furnace 1. To achieve such an efficient reduction effect, the carbon content included in the metal raw material 4 is preferably 50% or more of the theoretical carbon amount required to reduce the unreduced FeO.

Furthermore, the specific gravity of the metal raw material 4 is preferably between 1.7 g/cm$^3$ and 7.0 g/cm$^3$, so that the metal raw material 4 charged into the submerged arc furnace 1 can melt efficiently in the molten slag S without remaining on the molten slag S. It is also possible to charge a carburizer for molten metal, such as a carbonaceous material, together with the metal raw material 4. Increasing the carbon concentration in the molten metal is preferable as it can reduce the molten FeO concentration in the molten slag S. The carbon concentration in the molten metal is not particularly limited. For example, when the carbon concentration is determined in accordance with the molten FeO concentration, the carbon concentration is preferably set to 1.5 to 4.5 mass% (the concentration in the molten metal) to achieve the effect of reducing the amount of molten FeO.

As described above, the method for melting a metal raw material according to the present embodiment involves: setting the metallization ratio of the metal raw material 4 to be charged into the submerged arc furnace 1 to 60% or greater, which can reduce the thermal energy required to melt the metal raw material 4; and supplying a stable current to the submerged arc furnace 1, which enables melting a large amount of metal raw material 4.

The method for melting a metal raw material according to the present embodiment may include adding, together with the metal raw material 4 composed partially or entirely of reduced iron, an auxiliary raw material including at least one of a slag forming material for adjusting the basicity (CaO/SiO$_2$) of the molten slag S formed on the molten iron P, and a carbonaceous material for adjusting the C content in the molten iron P. Herein, the basicity (CaO/SiO$_2$) of the molten slag S refers to the mass ratio of CaO to SiO$_2$ in the molten slag.

In the method for melting a metal raw material according to the present embodiment, the metal raw material 4 composed partially or entirely of reduced iron, and the auxiliary raw material may be mixed together, and the mixture may be supplied to the electrodes 3. Mixing the metal raw material 4 composed partially or entirely of reduced iron with the auxiliary raw material and supplying the mixture to the electrodes 3 is preferable, as it can efficiently melt the metal raw material 4.

Alternatively, in the method for melting a metal raw material according to the present embodiment, the metal raw material 4 composed partially or entirely of reduced iron, and the auxiliary raw material may be individually supplied to the electrodes 3. Individually mixing and supplying the metal raw material 4 composed partially or entirely of reduced iron, and the auxiliary raw material to the electrodes 3 is preferable, as it allows a predetermined required amount of the metal raw material 4 composed partially or entirely of reduced iron, or the auxiliary raw material to be charged into the submerged arc furnace 1 in accordance with the molten state of the metal raw material 4, thereby promoting the melting of the metal raw material 4.

It should be noted that, when the metal raw material 4 and the auxiliary raw material are individually mixed and supplied to the electrodes 3, the order of supply of the materials to the electrodes 3 is not particularly limited, and can be appropriately determined in consideration of the molten state of the metal raw material 4. The metal raw material 4 may be supplied either before or after the auxiliary raw material.

Further, when the metal raw material 4 and the auxiliary raw material are supplied to the electrodes 3, it is possible to appropriately select whether to mix the metal raw material 4 with the auxiliary raw material and supply the mixture to the electrodes 3, or individually supply the metal raw material 4 and the auxiliary raw material to the electrodes 3, taking into consideration of factors such as the molten state of the metal raw material 4 and the duration of current flow through the submerged arc furnace 1.

As the slag forming material contained in the auxiliary raw material, it is preferable to add limestone ($CaCO_3$) or quicklime (CaO) as a CaO source, and silica ($SiO_2$) as a $SiO_2$ source. The slag forming material may be in the form of lumps, powder, or granules, and is preferably used by being mixed with the metal raw material 4 composed partially or entirely of reduced iron. The basicity ($CaO/SiO_2$) of the molten slag S is preferably set within the range of 1.0 to 1.5 by using the slag forming material. When the basicity of the molten slag S falls within this range, the composition of the molten slag S becomes similar to that of blast furnace slag, making it suitable for reuse as a base course material, such as cement. In addition, the total iron content in the molten slag S is preferably 5.0 mass% or less. When the total iron content in the molten slag S is between 0.1 and 5.0 mass%, the iron yield increases, which is preferable.

Coke or coal can be used as the carbonaceous material. Biomass charcoal may also be used as the carbonaceous material. The carbonaceous material may be in the forms of lumps or powder, and is preferably used together with or by being mixed with the raw materials M including the metal raw material 4, by processes such as granulation. The C content in the molten iron P is preferably adjusted to fall within the range of 2.0 to 5.0 mass%. When the C content in the molten iron P is within this range, molten metal obtained by melting the metal raw material 4 can be used as pig iron either directly or as a steelmaking raw material in the next step.

The method for melting a metal raw material according to the present embodiment involves using electrical energy to melt the metal raw material 4. Therefore, the method for melting a metal raw material according to the present embodiment can achieve the effect of reducing $CO_2$ emissions, as compared to a case where combustion heat of carbon is used, such as in the blast furnace process. It should be noted that electrical energy generated from renewable energy sources may be used as the electrical energy used to melt the metal raw material 4.

The method for melting a metal raw material according to the present embodiment is characterized in that the resistivity $\rho$ within the submerged arc furnace 1, which is used as the electric furnace, is set within the range of 0.01 to 0.02 ($\Omega \cdot m$). When the resistivity $\rho$ within the submerged arc furnace 1 is 0.01 ($\Omega \cdot m$) or greater, failures such as short circuits between electrodes formed from the plurality of electrodes 3 can be prevented, thereby ensuring stable current flow, which is preferable. The resistivity $\rho$ within the submerged arc furnace 1 is preferably 0.02 ($\Omega \cdot m$) or less, as this can reduce the power consumption required to melt the metal raw material 4 composed partially or entirely of reduced iron.

Fig. 2 is a schematic view illustrating the state of an electrode and its surrounding area when a current is passed through the electric furnace used to perform the method for melting a metal raw material according to the present embodiment. As illustrated in Fig. 2, an arc current generated from the electrode 3 flows in a hemispherical shape, with the radius of the current flow ranging from the center point of the cross-section, represented by r.

Herein, when the radius r of the current flow range is significantly greater than the electrode diameter D of the electrode 3, the resistivity $\rho$ ($\Omega \cdot m$) within the submerged arc furnace 1, which is used as the electric furnace, can be calculated using Relational Expression (2) below.

[Expression 3]

$$\boldsymbol{\rho} \text{ (resistivity within furnace)} = \frac{U_\rho \times \pi D}{I} \qquad (2)$$

In Relational Expression (2) above, $\rho$ represents the resistivity ($\Omega \cdot m$) within the electric furnace, $U_\rho$ represents the electrode-to-ground voltage (V), D represents the electrode diameter (m), and I represents the effective value of current per electrode (A/electrode).

Further, in Relational Expression (2), the effective value I of current per electrode (A/electrode) can be measured directly. Then, the density Je (A/m$^2$) of a current passed through the electric furnace can be calculated with Relational Expression (3) below, using the measured effective value I of current per electrode (A/electrode).
[Expression 4]

$$J_e = \frac{I}{D^2\pi/4} \qquad (3)$$

In Relational Expression (3) above, $J_e$ represents the current density (A/m$^2$), and D represents the electrode diameter (m).

When the submerged arc furnace 1 includes three electrodes 3, it operates as a three-phase AC submerged arc furnace. In Relational Expression (2), $U_\rho$ represents the electrode-to-ground voltage (V). Provided that the effective value of the line-to-line voltage across electrodes formed from the three electrodes 3 when the submerged arc furnace 1 serves as a three-phase AC submerged arc furnace is represented by $V_L$, the electrode-to-ground voltage $U_\rho$ (V) and the effective value $V_L$ (V) of the line-to-line voltage across the electrodes formed from the electrodes 3 can be represented by Relational Expression (4) below.
[Expression 5]

$$U\rho = \frac{V_L}{\sqrt{3}} \qquad (4)$$

In addition, when the submerged arc furnace 1 includes a plurality of pairs of electrodes 3, it operates as a single-phase AC submerged arc furnace. In Relational Expression (2), $U_\rho$ represents the electrode-to-ground voltage (V). Provided that the effective value of the line-to-line voltage across electrodes formed from the plurality of pairs of electrodes 3 when the submerged arc furnace 1 serves as a single-phase AC submerged arc furnace, is represented by $V_L$, the electrode-to-ground voltage $U_\rho$ (V) and the effective value $V_L$ (V) of the line-to-line voltage across the electrodes formed from the electrodes 3 can be represented by Relational Expression (5) below.
[Expression 6]

$$U\rho = \frac{V_L}{2} \qquad (5)$$

It should be noted that, with respect to each of Relational Expressions (4) and (5), the effective value $V_L$ of the line-to-line voltage across the electrodes is smaller than the line-to-line voltage on the secondary side of the transformer by an amount corresponding to a voltage drop caused by an electric circuit formed in the submerged arc furnace 1. However, the amount of such a decrease in voltage corresponding to the voltage drop can be ignored as it is relatively small in the electric circuit formed in the submerged arc furnace 1.

As described above, in the method for melting a metal raw material according to the present embodiment, the electrode-to-ground voltage $U_\rho$ (V) is calculated by taking into account the relationship between the power transmission method employed by the submerged arc furnace 1 and the effective value $V_L$ (V) of the line-to-line voltage across electrodes formed from the plurality of electrodes 3 of the submerged arc furnace 1. The resistivity $\rho$ ($\Omega \cdot$m) within the submerged arc furnace 1 can be set based on the thus calculated value of the electrode-to-ground voltage $U_\rho$ (V).

Meanwhile, the electric furnace used in the method for melting a metal raw material according to the present embodiment may be an arc furnace. If an arc furnace is employed to perform the method for melting a metal raw material according to the present embodiment, it is preferable to adjust at least one of the distance from the interface of the molten iron present in the arc furnace to each arc electrode provided in the arc furnace, the arc voltage E (V), which is the voltage to ground, and the arc current I (A) per arc electrode.

Specifically, the values of the arc voltage E (V), which is the voltage to ground, and the arc current I (A) per arc electrode of the arc furnace may be set so as to satisfy Relational Expression (i) below.
[Expression 7]

$$\frac{E\,[V]}{\sqrt{I\,[A]}} \leqq 2.0 \qquad (i)$$

With the method for melting a metal raw material according to the present embodiment, it is possible to maintain the arc stability and favorably melt the metal raw material by ensuring that the arc voltage E (V), which is the voltage to ground, and the arc current I (A) per arc electrode of the arc furnace satisfy Relational Expression (i) above. With respect to Relational Expression (i), if the value obtained by dividing the arc voltage E (V), which is the voltage to ground, by the square root of the arc current I (A) per arc electrode exceeds 2.0, the arc stability cannot be maintained during the melting of the metal raw material, which is undesirable.

It should be noted that, with respect to Relational Expression (i), the lower limit of the value obtained by dividing the arc voltage E (V), which is the voltage to ground, by the square root of the arc current I (A) per arc electrode may be appropriately set in accordance with the output of the arc furnace and the stirring conditions for the molten iron. The lower limit is preferably 0.5 or greater.

As described above, according to the invention of the first embodiment, it is possible to perform a process of melting a large amount of metal raw material by appropriately setting the conditions for performing a process of melting a metal raw material composed partially or entirely of reduced iron, using a submerged arc furnace (SAF) or an arc furnace, and by passing a stable current through the electric furnace.

[Second embodiment]

A method for melting a metal raw material according to a second embodiment will be described. The method for melting a metal raw material according to the present embodiment is characterized by setting, in the method for melting a metal raw material according to the foregoing embodiment, the density of a current flowing through the electrodes of the electric furnace to be in the range of 50 to 70 (A/m$^2$). Characteristic features included in the method for melting a metal raw material according to the present embodiment will be described below.

The method for melting a metal raw material according to the present embodiment is characterized by setting the density of a current flowing through the electrodes of the electric furnace to be in the range of 50 to 70 (A/m$^2$). When the density of a current flowing through the electrodes of the electric furnace is 50 (A/m$^2$) or greater, it is possible to set the resistivity within the electric furnace such that current flow stability is ensured, thereby enabling the production of self-baking electrodes by baking carbon paste, which is preferable. When the density of a current flowing through the electrodes of the electric furnace is 70 (A/m$^2$) or less, it is possible to produce self-baking electrodes by baking carbon paste while maintaining the value of the resistivity within the electric furnace high, which is preferable.

The electrodes of the electric furnace used in the method for melting a metal raw material according to the present embodiment may be either prebaked electrodes or self-baking electrodes. That is, the electrodes of the electric furnace may be either of the prebaked type or the self-baking type. When the electrodes are of the self-baking type, such electrodes may also be referred to as Soderberg electrodes.

For example, each self-baking electrode extends through an opening in the roof or canopy of the electric furnace, and includes an electrode casing arranged vertically. The upper end of the electrode casing is open to allow for the addition of unbaked carbonaceous electrode paste (carbon paste) used as the electrode material. This unbaked carbonaceous electrode paste softens and melts when heated, and is then baked into a solid carbon electrode by the heat released within the carbonaceous electrode paste in a region where the electrode is to be supplied with an electrical operating current.

A metal raw material composed partially or entirely of reduced iron can be melted as the thus produced self-baking electrodes (Soderberg electrodes) generate an arc discharge necessary for melting the metal raw material containing reduced iron.

It should be noted that the distal end portion of each electrode casing may be formed to expose the self-baking electrode formed by baking.

In the method for melting a metal raw material according to the present embodiment, setting the density of a current flowing through the electrodes of the electric furnace to be in the range of 50 to 70 (A/m$^2$) can, when the electrodes of the electric furnace are self-baking electrodes, increase the likelihood of baking unbaked carbonaceous electrode paste (carbon paste), and thus produce self-baking electrodes (Soderberg electrodes) with excellent performance, which is preferable.

As described above, with the method for melting a metal raw material according to the present embodiment, it is possible to reduce the thermal energy required to melt the metal raw material and to enable the smooth production of self-baking electrodes by appropriately setting the density of a current flowing through the electrodes of the electric furnace. This allows for stable operation of the electric furnace having the self-baking electrodes.

As described above, with the method for melting a metal raw material according to the second embodiment, it is possible to favorably bake unbaked carbonaceous electrode paste, which is a raw material of electrodes used in the electric furnace, and thereby facilitate the production of self-baking electrodes by setting the density of a current flowing through the electrodes of the electric furnace in the range of 50 to 70 $(A/m^2)$. In addition, with the method for melting a metal raw material according to the second embodiment, it is possible to reduce the thermal energy required to melt reduced iron and to perform a process of melting a large amount of metal raw material by passing a stable current through the electric furnace.

[Third embodiment]

A method for melting a metal raw material according to a third embodiment will be described. The method for melting a metal raw material according to the present embodiment is characterized in that, in the method for melting a metal raw material according to the foregoing embodiment, the electric furnace is either a three-phase AC type having three electrodes or a single-phase type having a plurality of pairs of electrodes. Characteristic features included in the method for melting a metal raw material according to the present embodiment will be described below.

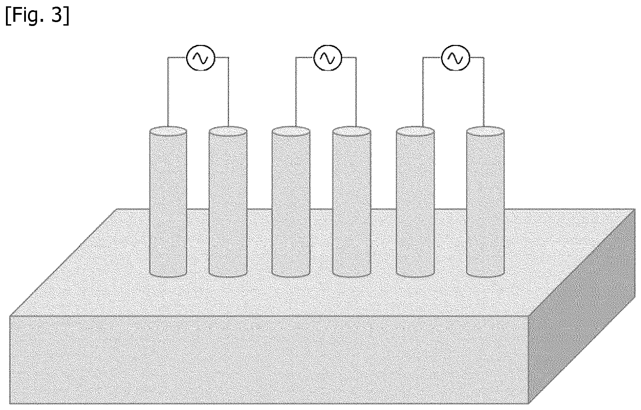

Fig. 3 is a schematic view illustrating an overview of a single-phase AC submerged arc furnace used to perform the method for melting a metal raw material according to the present embodiment. As illustrated in Fig. 3, the single-phase AC submerged arc furnace includes three pairs of electrodes 3, and the total number of the electrodes 3 is six. Herein, in the method for melting a metal raw material according to the present embodiment, the electrode-to-ground voltage $U_\rho$ (V) required to appropriately set the resistivity $\rho$ ($\Omega\cdot$m) within the furnace can be represented by Relational Expression (5) above, using the effective value $V_L$ of the line-to-line voltage across electrodes formed from the three pairs of electrodes 3. That is, the electrode-to-ground voltage $U_\rho$ (V) required for the single-phase AC submerged arc furnace to melt a metal raw material containing reduced iron is equal to one-half of the effective value $V_L$ of the line-to-line voltage across electrodes formed from the three pairs of electrodes 3.

That is, with the method for melting a metal raw material according to the present embodiment, it is possible to calculate the electrode-to-ground voltage $U_\rho$ (V) based on the effective value $V_L$ of the line-to-line voltage across electrodes, in accordance with the configuration and output power of the submerged arc furnace used in the method for melting a metal raw material, and thereby appropriately set the resistivity within the submerged arc furnace, enabling a stable current flow through an arc discharge.

In this regard, the method for melting a metal raw material according to the present embodiment can obtain the effect of reducing $CO_2$ emissions compared to a case where combustion heat of carbon is used, such as in the blast furnace process. Therefore, the method for melting a metal raw material according to the present embodiment is expected to serve as means for performing a process of melting a large amount of metal raw material.

Thus, the submerged arc furnace used in the method for melting a metal raw material according to the present embodiment is preferably a large electric furnace having a large number of electrodes so as to be capable of performing melting of a large amount of metal raw material.

From such a technical perspective, the electric furnace used in the method for melting a metal raw material according to the present embodiment may be a single-phase AC submerged arc furnace, and such a single-phase AC submerged arc furnace may be a rectangular prism-shaped arc furnace. When the single-phase AC submerged arc furnace is a rectangular prism-shaped arc furnace, a large number of pairs of electrodes can be disposed in the arc furnace.

Furthermore, it is also possible to prepare rectangular prism-shaped single-phase AC submerged arc furnaces each having a plurality of pairs of electrodes as single-phase AC submerged arc furnace units, and construct a large-scale system for melting a metal raw material by combining such single-phase AC submerged arc furnace units. With such a large-scale system for melting a metal raw material, it is possible to perform melting of a large amount of metal raw material.

Meanwhile, if the submerged arc furnace is a three-phase AC submerged arc furnace, the electrode-to-ground voltage $U_\rho$ (V) required for the submerged arc furnace to melt a metal raw material is equal to $1/\sqrt{3}$ of the effective value $V_L$ of the line-to-line voltage across electrodes formed from the three electrodes 3.

As described above, the invention according to the third embodiment allows for the configuration of a rectangular prism-shaped electric furnace having a large number of electrodes, which will be capable of coping with the future enlargement of electric furnaces. By passing a stable current through the electric furnace, it is possible to perform melting of a large amount of metal raw material.

[Other Embodiments]

The invention of this application has been described above with reference to the embodiments, but the invention of this application is not limited to the foregoing embodiments. Various modifications to the configuration and details of the invention of this application, as will be apparent by those skilled in the art, are possible within the technical scope thereof.

Further, a system or device having any combination of different features included in the respective embodiments also falls within the technical scope of the present invention.

Examples

The advantageous effects of the present invention will be specifically described below, based on an Example; however, the present invention is not limited thereto.

(Inventive Example 1)

Using the method for melting a metal raw material according to the present invention, a metal raw material composed partially or entirely of reduced iron was melted in a submerged arc electric furnace. In the present Example, either a three-phase AC submerged arc electric furnace A or a single-phase AC submerged arc electric furnace B shown in Table 1 was used. In Inventive Example 1, the single-phase AC submerged arc electric furnace B was used. Specifically, a submerged arc electric furnace A or a submerged arc electric furnace B having a capacity of 4 to 6 tons, such as the one shown in Fig. 1, was used to melt a metal raw material composed partially or entirely of reduced iron. Table 1 summarizes the specifications of the three-phase AC or single-phase AC electric furnace as the arc furnace used in the examination.
In the present Example, as the metal raw material composed partially or entirely of reduced iron, a material containing 88 to 94 mass% of T.Fe (total iron content) and 83 to 88 mass% of M.Fe (metallic iron content), and having a metallization ratio (M.Fe/T.Fe) of 94%, a C (carbon) concentration of 1.0 to 1.5 mass%, an apparent bulk density of 2.5 to 3.5 t/m$^3$, and a thickness of 5 to 20 mm was used.

[Table 1]

| Items | Electric furnace A | Electric furnace B |
|---|---|---|
| Power supply | Three-phase AC | Single-phase AC |
| Capacity of transformer | 4.0 MVA | 0.5 MVA |
| Electrodes | Graphite electrode | Graphite Electrodes |
| Electrode diameter | 16 inch (0.41m) | 4 inch (0.10m) |
| Number of electrodes | Three | Two |
| Outer diameter/ height | 3.1m / 2.6m | 0.6m / 0.5m |

The single-phase submerged arc electric furnace B was prepared, and a metal raw material composed partially or entirely of reduced iron was melted by setting the flat bath operating conditions. Specifically, in Inventive Example 1, shredder scrap, a carbonaceous material, and blast furnace slag were charged into the single-phase submerged arc electric furnace B, and then, a current was passed through the furnace to effect initial melting. The amounts of the materials charged into the furnace in advance were adjusted to obtain 750 kg of molten pig iron and 1500 kg of slag. After the materials charged into the furnace in advance had completely melted, a pre-blended raw material mixture of a metal raw material composed partially or entirely of reduced iron, as a main raw material, and an auxiliary raw material, such as a carbonaceous material, lime, alumina, and a MgO source, for adjusting the C concentration in the molten pig iron and adjusting the composition of slag, was continuously charged into the furnace. With the target maximum amount of molten pig iron set to 4 tons, the amount was adjusted based on the amounts of the raw materials charged into the furnace. The final thickness of the molten pig iron reached 140 mm.
In the melting of the metal raw material composed partially or entirely of reduced iron, the power was adjusted to satisfy predetermined conditions by adjusting the line-to-line voltage using taps. The current value was controlled by adjusting the electrode height. Further, the current density and the voltage to ground were adjusted so that the resistivity within the furnace would fall within a predetermined range. In Inventive Example 1, the conditions were set such that the resistivity within the furnace was 0.0115 ($\Omega \cdot$m). Table 2 shows the flat bath operating conditions and the evaluation of current flow stability when molten iron was melted in Inventive Example 1. The molten steel temperature was set in the range of 1400 to 1700°C. In addition, $E/\sqrt{I}$ was calculated as a value obtained by dividing the arc voltage E (V), which is the voltage to ground, by the square root of the current I (A) per arc electrode. Then, at least one of the electrode height, the arc voltage, and the arc current was adjusted so that $E/\sqrt{I}$ would be 2.0 or less.
It should be noted that, in Table 2, the evaluation of the current flow stability was performed according to the following criteria.
Good: Flat bath operation was possible with a stable current flow.

Poor: Flat bath operation was impossible due to an unstable current flow resulting from failures, such as arc interruption.

[Table 2]

| Test No. | Power source | Electrode diameter [inch] | Number of electrodes | Melting of Reduced Iron Flat Bath Operating Conditions | | | | | | Current flow stability | E/√I | Remarks |
|---|---|---|---|---|---|---|---|---|---|---|---|---|
| | | | | Power [kW] | Line-to-line voltage [V] | Voltage to ground [V] | Current [A/electrode] | Resistivity [Ω·m] within furnace | Current density [kA/m2] | | | |
| 1 | Single-phase AC | 4 | 2 | 150 | 50 | 25 | 3000 | 0.0027 | 370 | Poor | 0.46 | Comparative Example 1 |
| 2 | Single-phase AC | 4 | 2 | 200 | 100 | 50 | 2000 | 0.0080 | 247 | Poor | 1.12 | Comparative Example 2 |
| 3 | Single-phase AC | 4 | 2 | 200 | 120 | 60 | 1667 | 0.0115 | 206 | Good | 1.47 | Inventive Example 1 |
| 4 | Three-phase AC | 16 | 3 | 500 | 56 | 32 | 5173 | 0.0080 | 40 | Poor | 0.45 | Comparative Example 3 |
| 5 | Three-phase AC | 16 | 3 | 750 | 65 | 38 | 6652 | 0.0072 | 51 | Poor | 0.46 | Comparative Example 4 |
| 6 | Three-phase AC | 16 | 3 | 2700 | 140 | 81 | 11175 | 0.0092 | 86 | Poor | 0.76 | Comparative Example 5 |
| 7 | Three-phase AC | 16 | 3 | 2700 | 158 | 91 | 9860 | 0.0118 | 76 | Good | 0.92 | Inventive Example 2 |
| 8 | Three-phase AC | 16 | 3 | 1500 | 140 | 81 | 6208 | 0.0166 | 48 | Good | 1.02 | Inventive Example 3 |
| 9 | Three-phase AC | 16 | 3 | 2000 | 158 | 91 | 7304 | 0.0160 | 56 | Good | 1.07 | Inventive Example 4 |

(continued)

| Test No. | Power source | Electrode diameter [inch] | Number of electrodes | Melting of Reduced Iron Flat Bath Operating Conditions | | | | | | Current flow stability | E/√I | Remarks |
|---|---|---|---|---|---|---|---|---|---|---|---|---|
| | | | | Power [kW] | Line-to-line voltage [V] | Voltage to ground [V] | Current [A/electrode] | Resistivity [Ω·m] within furnace | Current density [kA/m2] | | | |
| 11 | Three-phase AC | 16 | 3 | 2000 | 140 | 81 | 8277 | 0.0124 | 64 | Good | 0.89 | Inventive Example 5 |
| 12 | Three-phase AC | 16 | 3 | 2700 | 177 | 102 | 8822 | 0.0148 | 68 | Good | 1.09 | Inventive Example 6 |
| 13 | Three-phase AC | 16 | 3 | 3500 | 205 | 118 | 9876 | 0.0153 | 76 | Good | 1.19 | Inventive Example 7 |

(Inventive Examples 2 to 7 and Comparative Examples 1 to 5)

The single-phase AC submerged arc electric furnace B was used as the electric furnace used to melt molten iron, and a metal raw material composed partially or entirely of reduced iron was melted as in Inventive Example 1, except that the flat bath operating conditions were changed. In each of Inventive Examples of 2 to 7, the resistivity within the furnace was set to 0.012 to 0.017 ($\Omega \cdot m$). Meanwhile, in each of Comparative Examples 1 to 5, the resistivity within the furnace was set to less than 0.010 ($\Omega \cdot m$). Table 2 shows the flat bath operation conditions and the evaluation of the current flow stability when molten iron was melted in each of Inventive Examples 2 to 7 and Comparative Examples 1 to 5.

Accordingly, it can be confirmed that the method for melting a metal raw material according to the present invention is a method that can perform melting of a large amount of metal raw material by passing a stable current through a submerged arc furnace (SAF).

Industrial Applicability

With the method for melting a metal raw material according to the present invention, it is possible to perform melting of a large amount of metal raw material by using a submerged arc furnace (SAF) as an electric furnace, and by passing a stable current through the electric furnace. This contributes to the development of related industries such as the steel industry, and therefore is highly beneficial from an industrial perspective.

Reference Signs List

1    electric furnace (submerged arc furnace, SAF)
2    furnace wall
3    electrode
4    reduced iron (metal raw material) charged into furnace
5    arc
P    molten iron (molten pig iron)
S    molten slag
M    raw materials

**Claims**

1.  A method for melting a metal raw material using an electric furnace comprising accommodating molten iron, molten slag, a metal raw material, and an auxiliary raw material in stacked layers in the electric furnace, and discharging the molten iron and the molten slag, **characterized in that**
    a resistivity within the electric furnace is set within a range of 0.01 to 0.02 ($\Omega \cdot m$) when a current is supplied to the molten metal to heat the molten metal through an arc or via the molten slag and the metal raw material.

2.  The method for melting a metal raw material according to claim 1, wherein the metal raw material is melted by means of flat bath operation.

3.  The method for melting a metal raw material according to claim 1, wherein a metallization ratio of the metal raw material is 60% or greater.

4.  The method for melting a metal raw material according to claim 1, wherein a density of a current flowing through electrodes of the electric furnace is set within a range of 50 to 70 ($A/m^2$).

5.  The method for melting a metal raw material according to claim 4, wherein the electrodes are of a self-baking type.

6.  The method for melting a metal raw material according to claim 1, wherein the electric furnace is a three-phase AC type having three electrodes, or a single-phase type having a plurality of pairs of electrodes.

7.  The method for melting a metal raw material according to claim 1, wherein the metal raw material and the auxiliary raw material are supplied to a gap between the electrodes after being mixed together or individually.

8.  The method for melting a metal raw material according to claim 7, wherein the metal raw material is composed partially or entirely of reduced iron.

**9.** The method for melting a metal raw material according to claim 1, wherein a basicity of the molten slag is in a range of 1.0 to 1.5, where the basicity of the molten slag is a mass ratio of CaO to $SiO_2$ in the molten slag.

**10.** The method for melting a metal raw material according to claim 1, wherein

the electric furnace is an arc furnace; and
at least one of a distance between the interface of the molten iron and the arc electrode, the arc voltage, and the arc current is adjusted, such that an arc voltage E (V), which is a voltage to ground, and an arc current I (A) per arc electrode of the arc furnace satisfy Relational Expression (i) below.
[Expression 1]

$$\frac{E[V]}{\sqrt{I[A]}} \leqq 2.0 \qquad (i)$$

**11.** The method for melting a metal raw material according to claim 1, wherein the electric furnace is a submerged arc furnace.

[Fig. 1]

[Fig. 2]

[Fig. 3]

## INTERNATIONAL SEARCH REPORT

| International application No. |
|---|
| **PCT/JP2024/027265** |

**A.    CLASSIFICATION OF SUBJECT MATTER**

*C21B 11/10*(2006.01)i; *F27B 3/08*(2006.01)i
FI:    C21B11/10; F27B3/08

According to International Patent Classification (IPC) or to both national classification and IPC

**B.    FIELDS SEARCHED**

Minimum documentation searched (classification system followed by classification symbols)

C21B11/10; F27B3/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2003-105415 A (KABUSHIKI KAISHA KOBE SEIKO SHO) 09 April 2003 (2003-04-09) paragraphs [0001]-[0011], [0042]-[0046] | 1-11 |
| A | JP 9-137211 A (KABUSHIKI KAISHA KOBE SEIKO SHO) 27 May 1997 (1997-05-27) paragraphs [0003]-[0036] | 1-11 |
| A | JP 6-341773 A (KABUSHIKI KAISHA KOBE SEIKO SHO) 13 December 1994 (1994-12-13) claims | 1-11 |

☐ Further documents are listed in the continuation of Box C.     ☑ See patent family annex.

| \* | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 September 2024** | **08 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/027265**

| Patent document cited in search report | | | Publication date (day/month/year) | Patent family member(s) | | | Publication date (day/month/year) |
|---|---|---|---|---|---|---|---|
| JP | 2003-105415 | A | 09 April 2003 | US | 2003/0070507 | A1 | |
| | | | | paragraphs [0001]-[0013], [0059]-[0069] | | | |
| | | | | EP | 1298224 | A1 | |
| | | | | CA | 2402827 | A | |
| | | | | TW | 564261 | B | |
| | | | | KR | 10-2003-0028416 | A | |
| | | | | CN | 1410553 | A | |
| | | | | RU | 2002125939 | A | |
| | | | | ZA | 200207363 | A | |
| | | | | AU | 2002300990 | B | |
| | | | | CA | 2402827 | A1 | |
| JP | 9-137211 | A | 27 May 1997 | (Family: none) | | | |
| JP | 6-341773 | A | 13 December 1994 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020505579 W
- JP 2002317918 A
- JP 2003105415 A